# EUROPEAN PATENT APPLICATION

(11) **EP 1 584 669 A1**
(43) Date of publication of application: **12.10.2005**
(21) Application number: 04252068.4
(22) Date of filing: 07.04.2004
(51) Int. Cl.: C09J 5/06

(54) **Bonding of plastic-wood composites**

(71) Applicant: SOLVAY POLYOLEFINS EUROPE - BELGIUM (Société Anonyme), 1050 Bruxelles (BE)
(72) Inventor: The designation of the inventor has not yet been filed
(74) Representative: Smith, Julian Philip Howard

(57) **Abstract**

A process for bonding together a pair of surfaces is disclosed where at least one of the surfaces is a composite of thermoplastic resin and wood fibre and the other also comprises thermoplastic resin and/or wood fibre, the process comprising the steps of interposing between said surfaces a tie layer of a resin capable of chemically bonding to wood fibres, and then bunging said surfaces together under conditions of heat and pressure, whereby at least a part of said tie layer is melted. Preferred tie layers are maleic-anhydride modified resins. Articles made by the process are also disclosed.

## Description

The invention relates to the general field of composite materials made from wood or other cellulosic materials and plastics, and more particularly to a means of bonding together articles made from such composites.

Wood-plastic composites are typically used a replacement for wood (or plastic) in structural members employed in commercial and residential architecture, such as windows and doors. They also have widespread application as decking materials. The composite is typically made using an extrusion process with an input of polyolefin and wood fibre (eg sawdust) to form a composite material. Such materials often have improved processability, thermal and structural properties when compared with metal, vinyl, or wooden components. Structural members made from such composites, such as the members comprising a window frame, are typically secured together using an adhesive such as epoxy, or by mechanical fixings, eg a metal clasp. This is because heat-welding a pair of wood-plastic composite parts together generally provides an insufficiently strong bond, due to the high wood content in the composite.

We have found a means of providing strong bonds between objects made of wood-plastic composites which avoids the need for mechanical fixings or adhesives. By "adhesive" in this context is meant a compound which secures solely by chemical bonding.

Accordingly in a first aspect the invention provides an article having a pair of surfaces at least one of which is a composite of thermoplastic resin and wood fibre and the other of which also comprises thermoplastic resin and/or wood fibre, which surfaces are bonded together by a tie layer of a resin capable of chemically bonding to wood fibres.

In another aspect the invention provides a process for bonding together a pair of surfaces at least one of which is a composite of thermoplastic resin and wood fibre and the other of which also comprises thermoplastic resin and/or wood fibre, comprising the steps of interposing between said surfaces a tie layer of a resin capable of chemically bonding to wood fibres, and then bringing said surfaces together under conditions of heat and pressure, whereby at least a part of said tie layer is melted.

We have found that the invention provides a means of bonding resin-wood fibre composites which has a number of advantages over the use of adhesives. A strong bond is provided not only by melting of the resin in both the tie layer and the composite which then fuse together, but also by chemical bonding between the maleic anhydride and the wood fibres in the composite. The avoidance of a chemical adhesive eliminates any potential environmental problems due to solvents or toxic compounds such as formaldehyde.

Preferably, the two surfaces bonded together by the tie layer are both formed of a resin-wood composite. A typical example is the abutting surfaces of two members in a window frame, all of which is made of a resin-wood composite. However the invention also includes within its scope the bonding of a wood-resin composite article to another article which comprises pure resin or pure wood, and also the bonding of composites of different compositions or containing different resins.

A resin capable of chemically bonding to wood fibres is required to overcome the natural incompatibility between hydrophilic wood fibres and the hydrophobic polymer matrix of the thermoplastic resin.
Examples of resins capable of chemically bonding to wood fibres include titanium alcoholates, esters of phosphoric, phosphorous, phosphonic and silicic acids, metallic salts and esters of aliphatic, aromatic and cycloaliphatic acids, ethylene/acrylic or methacrylic acids, ethylene/esters of acrylic or methacrylic acid, ethylene/vinyl acetate resins, styrene/maleic anhydride resins or esters thereof, acrylonitrilebutadiene styrene resins,methacrylate/butadiene styrene resins (MBS), styrene acrylonitrile resins (SAN), and butadieneacrylonitrile copolymers.

Preferred resins capable of chemically bonding to wood fibres are resins which have been modified by a reactive group such as maleic anhydride or its esters, acrylic or methacrylic acid or their esters, vinylacetate, acrylonitrile, and styrene. Virtually any olefinically reactive residue that can provide a reactive functional group on a modified resin can be used. The modified base resin is preferably the same resin as that forming one or both of the surfaces to be bonded. Useful base resins are polyethylene, polypropylene, polystyrene and polyvinyl chloride. Ionomers of these resins may also be used.

The most preferred resins used as the tie layer comprise either a modified polypropylene or a modified polyethylene modified with maleic anhydride residues.

The tie layer may be in any form which enables it to be interposed between the two surfaces to be bonded. Preferably it is in the form of a sheet which is placed between the two surfaces, and then sandwiched between them as they are pushed together. However it may also be in the form of a powder or coating which is applied to one or both of the the surfaces before they are pushed together.

The thermoplastic resin of the resin-wood fibre composite is typically a polyolefin, or polyvinyl chloride, or polystyrene. Usually it is a polyolefin or polyvinyl chloride.

A typical polyolefin material used in such composites is a polyethylene or polypropylene polymer having a melting point of about 130°C and a melt index MI2 of from 0.1 to greater than 20 g/10min. A preferred polyethylene is a polyethylene homopolymer, or a copolymer containing 0.01 to 10 wt% of a C2-C6 alpha-olefin comonomer, with a preferred molecular weight of about 10,000 to 60,000. A preferred polypropylene material is a polypropylene homopolymer or copolymer containing 0.01 to 10 wt% of ethylene or a C4-C6 alpha-olefin comonomer, having a molecular weight of about 10,000 to 60,000. The composite is usually compatibilized using a compatibilizing agent that improves the wetting of the polymer on the wood fibre particle.

The wood fibre of the resin-wood fibre composite usually comprises the byproduct of sawing or milling softwoods commonly known as sawdust or milling tailings. Such wood fibre has a regular, reproducible shape and aspect ratio. Fibres are typically 0.1-5mm in length, up to 1mm in thickness and usually have an aspect ratio of at least 1.8.

While softwood is the primary source of wood fibre, it can also be derived from any number of available sources such as hardwood fibre ground newsprint, magazines, books, cardboard and wood pulps, and also various agricultural wastes (rice hulls, wheat, oat, barley and oat chaff, coconut shells, peanut shells, walnut shells, straw, corn husks, corn stalks, jute, hemp, bamboo, flax etc). All of the above are considered to be covered by the term "wood fibre" as used herein.

The ratio of resin to wood fibre in the composite may be any which provides a composite suitable for the purpose for which it is intended. Typically, the amount of wood fibre is from 10 to 80wt%, and the amount of resin from 20 to 90wt%. Preferred amounts of both wood fibre and resin are independently 30-70wt%. Compositions with a resin: wood fibre ratio of 30:70, 40:60, 50:50, 60:40 and 70:30 are all possible. The resin-wood fibre composite may also contain conventional additives such as fillers, lubricants, oxidation stabilizers, UV stabilizers, antistatic agents, antioxidants, fire retardants, dyes, pigments, plasticizers, mould release agents, extrusion mould release agents and the like. These additives are typically present at levels up to about 20 wt%, more usually from 0.1 to about 10 wt%, and most typically from 0.2 to 5 wt%.

The bonding process comprises bringing together the two surfaces to be bonded, with the tie layer sandwiched between them, under conditions of heat and pressure. In a preferred embodiment, the two surfaces are preheated immediately before being contacted, such that the residual heat upon contacting of the two surfaces is sufficient to melt the tie layer, thereby causing welding of the layer to the two surfaces. In the case where the tie layer is in the form of a separate sheet it may also be preheated, although it is obviously important not to melt it. In the case where the tie layer is pre-applied to one or both of the surfaces, the degree of heating should be sufficient to melt the tie layer for long enough that it is still molten when the two surfaces are pressed together.

In a preferred embodiment, heating of the surfaces is accomplished by bringing each surface into contact with a hot surface, eg of metal. This ensures that only the surface is heated. In one method of the invention, the surfaces are preheated by bringing them into contact with either side of a hot metal plate. When the surfaces are sufficiently hot, the surfaces are pulled away, the plate withdrawn and replaced with a sheet of the tie layer, and then the two surfaces pressed together.
The pressure is applied for a sufficient time for a secure bond to form between the two surfaces. It is preferred that pressure is applied until the surfaces have cooled sufficiently for the surfaces and the tie layer to have solidified.

### EXAMPLES

The flat ends of two resin - wood fibre composite window profiles were welded together and the tensile strength of the bond measured. The window profiles comprised identical members of a hollow composite of 30wt% high density polyethylene (including the usual additives such as lubricant, antioxidant and UV stabiliser) and 70wt% wood fibre, each having a cut end providing a flat surface of approximately 10cm² total surface area.

The two surfaces to be bonded were brought into contact with either side of a hot metal plate at 220°C for 1 minute under very light pressure (3kg). The surfaces were then pulled away, the hot plate withdrawn, and the tie layer (when used) interposed between the surfaces in its place. The surfaces were pressed together under pressure (17kg) without added heat for 7 minutes. The residual heat from previous contact with the hot plate was sufficient to weld the surfaces together.

The strength of the weld was evaluated by measuring the maximum tensile stress and maximum deformation using tensile bars. This was done by pulling the two halves of the welded profile apart at a rate of 2.5mm/minute (ISO 527-1 and ISO 1BA). Details of the tie layer used in each case and the results of the weld strength tests are given in Table 1 below.

**TABLE 1**

| Example | Film thickness µm | Film Type | Max Tensile Stress MPa | Max Deformation % |
|---|---|---|---|---|
| 1 | 25 | Eltex resin A (Maleic Anhydride HDPE)* | 7.00 | 0.34 |
| 2 | 100 | Eltex resin A (Maleic Anhydride HDPE)* | 7.20 | 0.35 |
| 3 | 70 | Eltex resin B (Ungrafted HDPE) | 5.30 | 0.30 |
| 4 | 110 | Film 90% Eltex resin C +10% Eltex resin D (both ungrafted HDPE) | 5.30 | 0.25 |
| 5 | - | No Film | Break | - |

| | | | | |
|---|---|---|---|---|
| * Eltex resin A is HDPE grafted with 2.5g/kg of maleic anhydride | | | | |

It can be seen from the Table above that the weld of the control example which did not contain any tie layer broke apart under the conditions of the test. A comparison of Examples 1 and 2 with Examples 3 and 4 shows that the use of a tie layer of maleic anhydride-grafted HDPE according to the invention provides a bond 30% stronger than that obtained using pure HDPE. Comparison of Examples 1 and 2 shows that the tie layer need only be 25µm thick to obtain excellent results.

## Claims

1. Article having a pair of surfaces, at least one of which is a composite of thermoplastic resin and wood fibre and the other of which also comprises thermoplastic resin and/or wood fibre, which surfaces are bonded together by a tie layer of a resin capable of chemically bonding to wood fibres.

2. Process for bonding together a pair of surfaces at least one of which is a composite of thermoplastic resin and wood fibre and the other of which also comprises thermoplastic resin and/or wood fibre, comprising the steps of interposing between said surfaces a tie layer of a resin capable of chemically bonding to wood fibres, and then bringing said surfaces together under conditions of heat and pressure, whereby at least a part of said tie layer is melted.

3. Process according to claim 2, wherein the tie layer is in the form of a sheet.

4. Process according to claim 2 or 3, wherein the tie layer is in the form of a powder or coating applied to one or both of the surfaces prior to bonding.

5. Process according to any of claims 2 to 4, wherein the two surfaces are preheated immediately before being contacted, such that the residual heat upon contacting of the two surfaces is sufficient to weld the tie layer and the two surfaces.

6. Article or process according to any preceding claim, wherein both surfaces independently comprise a composite of thermoplastic resin and wood fibre.

7. Article or process according to any preceding claim, wherein the tie layer comprises one or more of titanium alcoholates, esters of phosphoric, phosphorous, phosphonic and silicic acids, metallic salts and esters of aliphatic, aromatic and cycloaliphatic acids, ethylene/acrylic or methacrylic acids, ethylene/esters of acrylic or methacrylic acid, ethylene/vinyl acetate resins, styrene/maleic anhydride resins or esters thereof, acrylonitrilebutadiene styrene resins,methacrylate/butadiene styrene resins (MBS), styrene acrylonitrile resins (SAN), and butadieneacrylonitrile copolymers.

8. Article or process according to claim 7, wherein the tie layer comprises a resin which has been modified by maleic anhydride or its esters, acrylic or methacrylic acid or their esters, vinylacetate, acrylonitrile, or styrene.

9. Article or process according to any preceding claim, wherein the base resin of the tie layer is the same resin as that forming the resin part of one or both of the surfaces to be bonded.

10. Article or process according to any preceding claim, wherein the tie layer comprises either a modified polypropylene or a modified polyethylene modified with maleic anhydride residues.
